# EUROPÄISCHE PATENTANMELDUNG

(11) **EP 2 254 231 A1**
(43) Veröffentlichungstag der Anmeldung: **24.11.2010**
(21) Anmeldenummer: 10160787.7
(22) Anmeldetag: 22.04.2010
(51) Int. Cl.: H02M 7/48

(54) **Wechselrichteranordnung**

(30) Priorität: 06.05.2009 DE 102009002856
(71) Anmelder: Robert Bosch GmbH, 70442 Stuttgart (DE)
(72) Erfinder: Jaervelaeinen, Tero, 77815 Buehl (DE); Voigtlaender, Klaus, 73117 Wangen (DE); Kimmich, Peter, 71101 Schoenaich (DE); Bergmann, Ralf-Peter, 77880 Sasbach (DE)

(57) **Zusammenfassung**

Die Erfindung betrifft eine Wechselrichteranordnung zur Umwandlung eines konstanten Ausgangssignals eines Energieerzeugungsmoduls, insbesondere eines Solarzellenmoduls, in ein Wechselsignal, mit einem Eingangstor (717, 719) zum Empfangen des konstanten Ausgangssignals, einer Wechselrichterschaltung (709, 711, 713, 715), welche dem Eingangstor (717, 719) nachgeschaltet und zur Erzeugung des Wechselsignals vorgesehen ist, und einem unidirektionalen elektrischen Element (705), das zwischen dem Eingangstor (717, 719) und der Wechselrichterschaltung (709, 711, 713, 715) angeordnet ist, um einen rückwärtigen Stromfluss von der Wechselrichterschaltung (709, 711, 713, 715) zu dem Eingangstor (717, 719) zu unterbinden.

## Beschreibung

### Stand der Technik

Die vorliegende Erfindung betrifft eine Wechselrichteranordnung zur Umwandlung eines konstanten Ausgangssignals eines Energieerzeugungsmoduls in ein Wechselsignal.

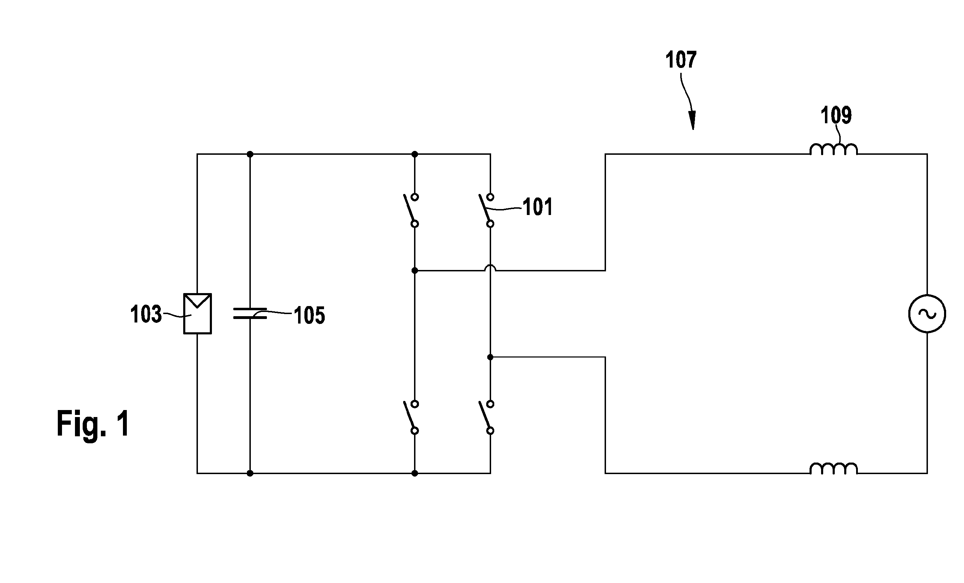

Zur Wechselrichtung von beispielsweise solar erzeugter Energie werden üblicherweise Wechselrichter, insbesondere Solarinverter, eingesetzt, welche einphasig oder dreiphasig ausgebildet sein können. Eine Grundschaltung für eine einphasige Wechselrichtung ist beispielsweise in Fig. 1 dargestellt, bei der zur Wechselrichtung eine H-Brücke mit vier Schaltern 101 verwendet wird. Die H-Brücke ist einer Solarzelle 103 nachgeschaltet, parallel zu welcher eine Kapazität 105 angeordnet ist. Das konstante Ausgangssignal der Solarzelle 103 wird mittels der jeweils paarweise schaltbaren Schalter 101 wechselgerichtet und in ein Wechselsignal umgewandelt, das über die jeweils zwischen zwei in Reihe geschalteten Schaltern 101 angeordneten Abgriffe beispielswiese einem Energieverteilungsnetz 107, dessen Zuleitungen durch Induktivitäten 109 repräsentiert sind, zugeführt wird.

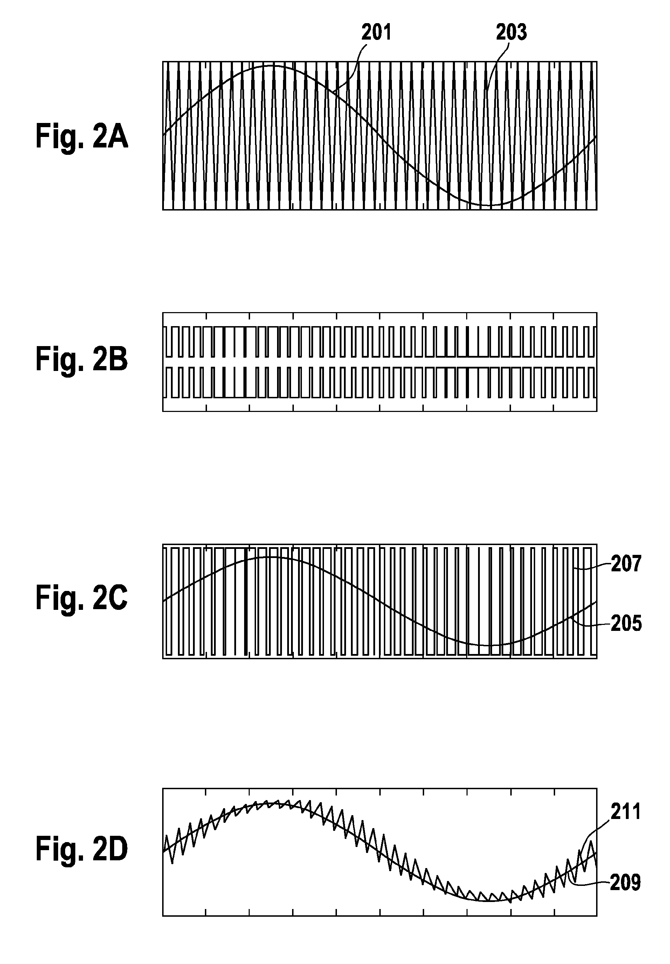

In den Figuren 2A bis 2D ist die Bildung des Wechselsignals veranschaulicht. In Fig. 2A ist der Verlauf 201 eines Soll-Stroms I_{SOLL} bezüglich eines Verlaufs einer Spannung 203 dargestellt. Fig. 2B zeigt die Zustände der jeweils paarweise zu schließenden Schalter 101. Fig. 2C zeigt einen Verlauf einer Netzspannung 205 im Vergleich zu einem Verlauf einer Brückenspannung 207. In Fig. 2D sind die Verläufe des Soll-Stroms 209 und des Ist-Stroms 211 dargestellt.

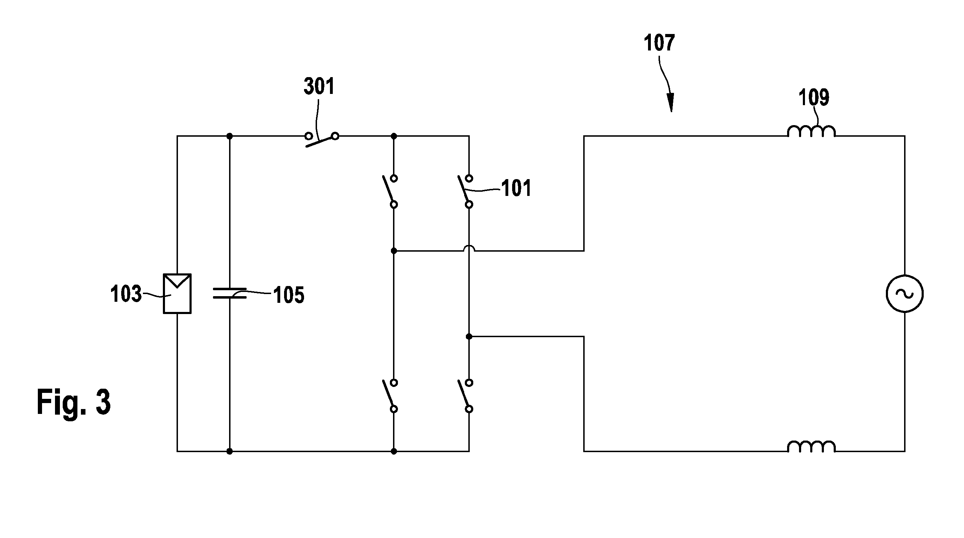

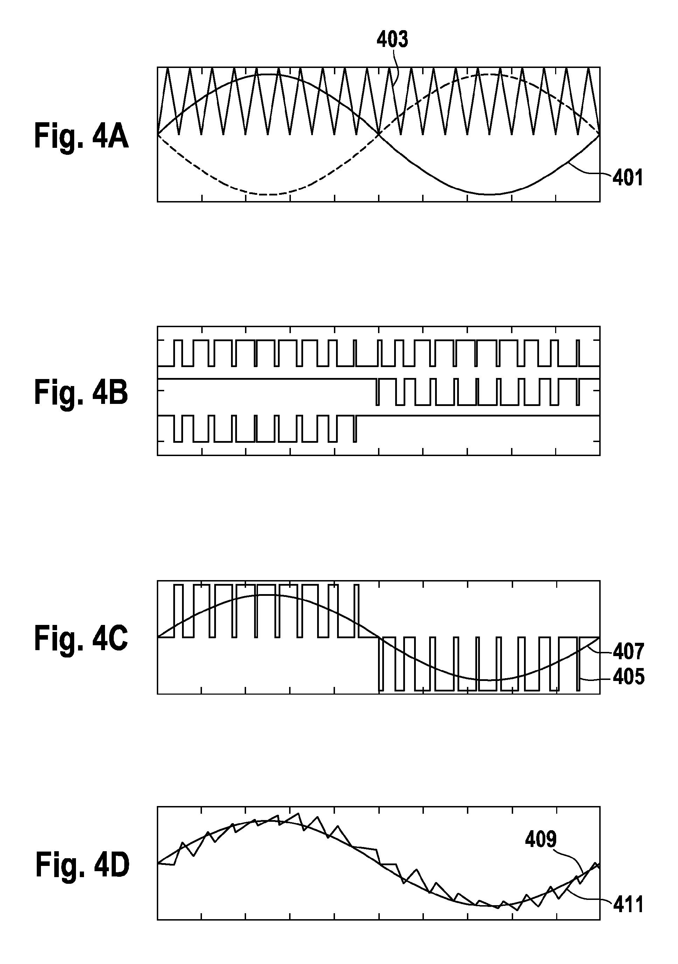

Fig. 3 zeigt eine Ausführung des Solarinverters aus Fig. 1, bei der der H-Brücke ein Schalter 301 vorgeschaltet ist. In Fig. 4 sind die dazugehörigen Signalverläufe dargestellt, wobei Fig. 4A einen Verlauf eines Stroms 401 und einer Spannung 403 zeigt. In Fig. 4B sind die Zustände des Schalters 301 sowie der Schalter 101, welche jeweils paarweise geschlossen werden, dargestellt. Fig. 4C zeigt resultierende Spannungsverläufe 405 sowie eine Brückenspannung 407. In Fig. 4D sind der Soll-Strom 409 sowie der Ausgangsstrom 411 dargestellt.

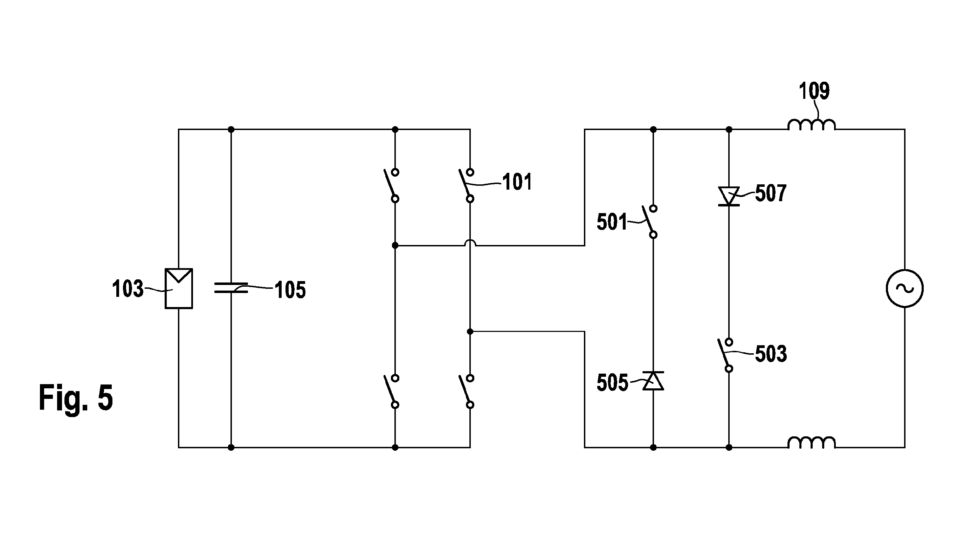

Fig. 5 zeigt den Wechselrichter aus Fig. 1, dem ausgangsseitig eine Parallelschaltung von zwei Reihenschaltungen mit jeweils einem Schalter 501 und 503 sowie einer Diode 505 und 507. Die Dioden 505 und 507 sind bei geschlossenen Schaltern 501 und 503 antiparallel geschaltet. Durch die der H-Brücke nachgeschaltete Parallelschaltung wird die HERIC-Topologie realisiert, bei der ein ausgangsseitiges Energiependeln unterbunden wird.

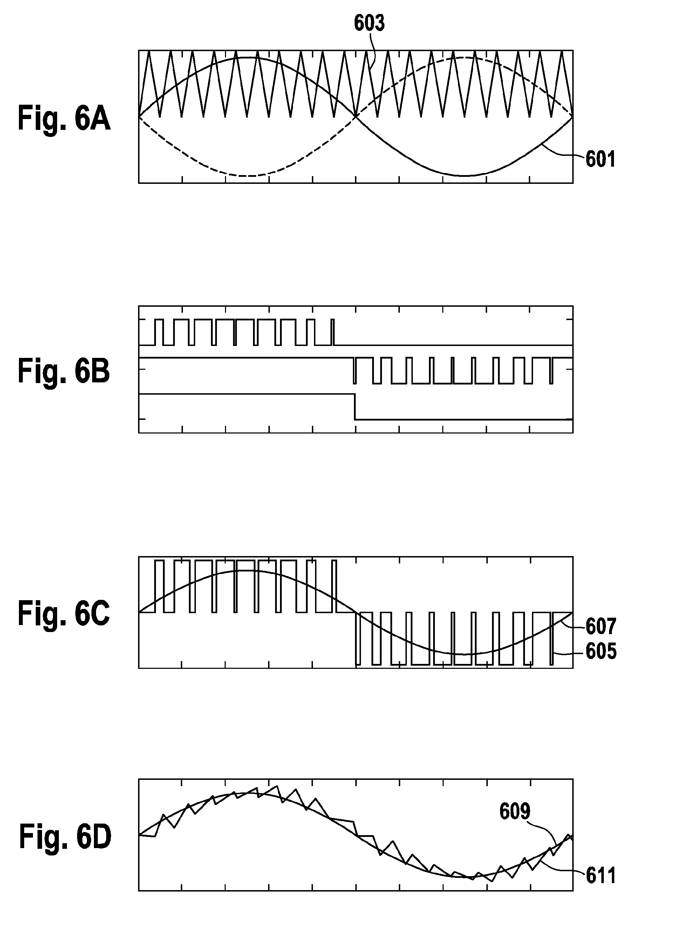

In Fig. 6 sind die dazugehörigen Signalverläufe dargestellt, wobei Fig. 6A einen Verlauf eines Stroms 601 und einen Verlauf einer Spannung 603 zeigt. Fig. 6B zeigt die Schließzustände der jeweils paarweise betätigbaren Schalter 101 sowie, im unteren Diagramm, die paarweisen Zustände der Schalter 501 und 503. In Fig. 6C sind die Verläufe der Brückenausgangsspannung 605 sowie der SollSpannung 607 dargestellt. Fig. 6D zeigt den Verlauf des Soll-Stroms 609 und des Brückenausgangsstroms 611.

Die vorstehend beschriebenen Topologien haben jedoch den Nachteil, dass beim Umschalten der jeweiligen Schalter Energie in die Kondensatoren und Solarzellen rückwärtig eingespeist wird, wodurch der Wirkungsgrad der Wechselrichtung verringert wird. Eine weitere Verlustquelle sind die internen Halbleiterwiderstände. Darüber hinaus entstehen beim Umschalten der Schalter insbesondere bei höheren Taktfrequenzen zusätzliche Schaltverluste, welche derzeit nur durch ein Kurzschließen der jeweiligen Brückentopologie minimiert werden können.

### Offenbarung der Erfindung

Die folgende Erfindung basiert auf der Erkenntnis, dass der Wirkungsgrad bei einer Wechselrichtung eines konstanten Ausgangssignals eines Energieerzeugungsmoduls, beispielsweise einer Solarzelle, durch eine unidirektionale Entkopplung beispielsweise mittels einer in Flussrichtung geschalteter Diode, des Energieerzeugungsmoduls bzw. einer hierzu parallel geschalteten Kapazität von der Wechselrichterschaltung realisiert werden kann.

Gemäß einem Aspekt betrifft die Erfindung eine Wechselrichteranordnung zur Umwandlung eines konstanten Ausgangssignals, beispielsweise eines konstanten Spannungssignals oder eines konstanten Stromsignals, eines Energieerzeugungsmoduls in ein Wechselsignal, beispielsweise in einen Wechselstrom oder in eine Wechselspannung. Die Wechselrichteranordnung umfasst ein Eingangstor zum Empfangen des konstanten Ausgangssignals von dem Energieerzeugungsmodul und eine dem Eingangstor nachgeschaltete Wechselrichterschaltung, welche zur Erzeugung des Wechselsignals vorgesehen ist. Bevorzugt ist zwischen dem Eingangstor und der Wechselrichterschaltung ein unidirektionales elektrisches Element angeordnet, um einen rückwärtigen Stromfluss von der Wechselrichterschaltung zu dem Eingangstor zu unterbinden, wodurch der Umwandlungswirkungsgrad erhöht wird.

Gemäß einer Ausführungsform ist parallel zu dem Eingangstor ein Energiespeicher, beispielsweise ein Kondensator, geschaltet, wobei das unidirektionale elektrische Element einen Anschluss des Energiespeichers mit einem Anschluss der Wechselrichterschaltung verbindet und vorgesehen ist, den rückwärtigen Stromfluss zur Verhinderung eines durch den Energiespeicher fließenden Umladestroms zu unterbinden. Dadurch wird in vorteilhafter Weise einer Umladung des Energiespeichers entgegengewirkt.

Gemäß einer Ausführungsform umfasst der Energiespeicher zumindest zwei in Reihe geschaltete Kondensatoren, wobei ein Knotenpunkt zwischen den in Reihe geschalteten Kondensatoren als Referenzpotentialanschluss, insbesondere als Masseanschluss, ausgeführt ist. Dadurch wird in vorteilhafter Weise eine "schwimmende" Masse realisiert.

Gemäß einer Ausführungsform ist die Wechselrichterschaltung eine Brückenschaltung mit pro Phase zumindest zwei in Reihe geschalteten Schaltelementen, beispielsweise Schaltern, welche als Transistorschalter ausgeführt sein können, wobei ein Knotenpunkt zwischen den in Reihe geschalteten Schaltelementen und dem vorstehend genannten Knotenpunkt zwischen den in Reihe geschalteten Kondensatoren beispielsweise mittels eines weiteren Schaltelementes, beispielsweise eines weiteren Transistorschalters, verbindbar ist, um einen Ausgang der Wechselrichterschaltung, d.h. um einen Phasenausgang zwischen den zwei in Reihe geschalteten Schaltelementen, mit dem Referenzpotential zu verbinden. Dadurch wird in vorteilhafter Weise ein Kurzschließen der jeweiligen Ausgangsphase der Wechselrichteranordnung ermöglicht. Ist die Wechselrichteranordnung beispielsweise dreiphasig ausgeführt, so umfasst sie beispielsweise eine Parallelschaltung von drei Reihenschaltungen mit jeweils zwei in Reihe geschalteten Schaltelementen der vorgenannten Art. Die Knotenpunkte zwischen den jeweils in Reihe geschalteten Schaltelementen bilden dabei jeweils einen Phasenausgang, welcher beispielsweise mittels eines Schalters mit dem vorstehend genannten Referenzpotential verbindbar und dadurch kurzschließbar ist.

Gemäß einer Ausführungsform ist in Reihe mit dem Energiespeicher zumindest ein Schaltelement, beispielsweise ein Transistorschalter, geschaltet, wodurch ein Zu- oder ein Abschalten des Energiespeichers in vorteilhafter Weise ermöglicht ist. Darüber hinaus kann ein weiteres Schaltelement vorgesehen sein, das ebenfalls mit dem Energiespeicher derart verbunden ist, dass dieser zwischen den Schaltelementen angeordnet und beidseitig abgeschaltet werden kann. Dadurch wird eine sichere Abschaltung des Energiespeichers ermöglicht.

Gemäß einer Ausführungsform umfasst das Eingangstor einen ersten Anschluss und einen zweiten Anschluss, wobei die Wechselrichterschaltung einen Eingangsanschluss und einen Ausgangsanschluss umfasst, wobei ein Energiespeicher parallel mit dem Eingangstor verbunden ist und wobei das unidirektionale elektrische Element mit dem ersten Anschluss des Eingangstors und dem Eingangsanschluss der Wechselrichterschaltung verbunden ist. Dadurch wird in vorteilhafter Weise die Zuführung des Ausgangssignals der Solarzelle über das unidirektionale elektrische Element, beispielsweise eine Diode, zu der Wechselrichteranordnung realisiert.

Gemäß einer Ausführungsform ist das unidirektionale elektrische Element dauerhaft, d.h. unabhängig von einer Amplitude des konstanten Ausgangssignals oder des Wechselsignals oder von einem Zustand der Solarzelle oder von einem Zustand der Wechselrichterschaltung unidirektional geschaltet. Dadurch wird in vorteilhafter Weise in allen Betriebszuständen eine rückwärtige Entkopplung der Wechselrichterschaltung vor dem Eingangstor bewirkt.

Gemäß einer Ausführungsform ist das unidirektionale elektrische Element eine Diode, beispielsweise eine in Flussrichtung betriebene Diode, oder eine zu einer Diode bevorzugt dauerhaft geschaltete Transistorschaltung. Dadurch wird die vorstehende Entkopplung der Wechselrichterschaltung von dem Eingangstor mit einfachen Mitteln bewirkt.

Gemäß einer Ausführungsform ist die Wechselrichterschaltung eine Brückenschaltung, beispielsweise eine H-Brückenschaltung mit einer Mehrzahl von Schaltern, insbesondere mit einer Mehrzahl von Transistorschaltern. Das erfindungsgemäße Konzept kann damit vorteilhaft auch in bestehenden Solarinvertern bzw. sonstigen Wechselrichtern eingesetzt werden.

Gemäß einer Ausführungsform ist zwischen dem Eingangstor und der Wechselrichterschaltung ein Entkopplungsschaltelement, beispielsweise ein Transistorschalter, angeordnet, um den rückwärtigen Stromfluss noch sicherer zu unterbinden. Hierzu wird das Entkopplungsschaltelement unmittelbar vor einem Umschaltzeitpunkt zumindest eines der Schaltelemente der als eine Brückenschaltung ausgebildeten Wechselrichterschaltung in einen hochohmigen Zustand überführt, beispielsweise geöffnet, was mittels einer Steuerungseinrichtung realisiert werden kann. Dadurch wird eine sichere Verhinderung des rückwärtigen Stromflusses von der Wechselrichterschaltung zu dem Eingangstor hin unterbunden. Das Entkopplungselement ist bevorzugt vor dem Umschalten des zumindest einen Schaltelementes in einen ersten Schaltzustand schaltbar, insbesondere öffnenbar, und nach dem Umschalten des zumindest einen Schaltelementes in einen zweiten Schaltzustand schaltbar, insbesondere schließbar, wobei eine Zeitdauer des Verbleibs des Entkopplungsschaltelementes in dem ersten Zustand von einer Schaltperiodendauer des zumindest einen Schaltelementes abhängt. Wird das zumindest eine Schaltelemente beispielsweise periodisch mit einer Periodendauer geschaltet, so kann die Verweildauer des Entkopplungsschaltelementes in dem ersten Schaltzustand und somit ein Fenster, innerhalb dessen das zumindest eine Schaltelemente geschaltet wird, beispielsweise 0,1%, 1%, 1,5% oder 2% der vorgenannten Periodendauer betragen. So kann beispielsweise der Umschaltzeitpunkt des zumindest einen Schaltelementes in der Mitte des vorgenannten Zeitfensters erfolgen, so dass eine einfache Ansteuerung der Schaltelemente möglich ist.

Gemäß einer Ausführungsform ist die Wechselrichterschaltung einphasig oder mehrphasig, beispielsweise dreiphasig, wobei die Anordnung des unidirektionalen elektrischen Elementes vorteilhafterweise gleichbleibt.

Gemäß einem Aspekt betrifft die Erfindung eine Energieerzeugungsanordnung, insbesondere eine Energieerzeugungsanordnung, mit einem Energieerzeugungsmodul, insbesondere einem Solarzellenmodul mit zumindest einer Solarzelle, und der erfindungsgemäßen Wechselrichteranordnung, welche parallel zu dem Energieerzeugungsmodul, insbesondere parallel zu der zumindest einen Solarzelle, geschaltet ist.

Gemäß einer Ausführungsform ist zumindest ein Schaltelement, beispielsweise ein Transistorschalter, in Reihe mit dem Energieerzeugungsmodul geschaltet und vorgesehen, das Energieerzeugungsmodul zu- oder abzuschalten. Dadurch wird eine Verlust bringende Umladung der Solarzelle oder eines hierzu parallel geschalteten Energiespeichers vermieden.

Gemäß einer Ausführungsform sind das Schaltelement sowie das Schaltelement der Wechselrichteranordnung, welche als eine Brückenschaltung ausgeführt sein kann, gleichzeitig oder synchron zum zumindest einen Schaltelement der Wechselrichterschaltung oder mit einer vorbestimmten Verzögerung nacheinander schaltbar, wodurch die vorgenannte Umladung des Energieerzeugungsmoduls oder eines Ladekondensators verhindert und eine Schaltungsdynamik erhöht werden können.

Gemäß einem Aspekt betrifft die Erfindung ein Verfahren zum Umwandeln eines konstanten Ausgangssignals in ein Wechselsignal mittels einer Wechselrichterschaltung mit dem Schritt des Zuführens des konstanten Ausgangssignals zu der Wechselrichterschaltung über ein unidirektionales elektrisches Element, beispielsweise über eine Diode, um das Wechselsignal zu erhalten. Weitere Verfahrensschritte ergeben sich unmittelbar aus der Funktionalität der erfindungsgemäßen Wechselrichteranordnung oder der erfindungsgemäßen Energieerzeugungsanordnung.

Weitere Ausführungsbeispiele werden Bezug nehmend auf die beiliegenden Figuren näher beschrieben. Es zeigen:
Fig. 1 einen Solarwechselrichter;
Fig. 2 Signalverläufe;
Fig. 3 einen Wechselrichter;
Fig. 4 Signalverläufe;
Fig. 5 einen Wechselrichter;
Fig. 6 Signalverläufe;
Fig. 7 eine Energieerzeugungsanordnung; und
Fig. 8 eine Energieerzeugungsanordnung.

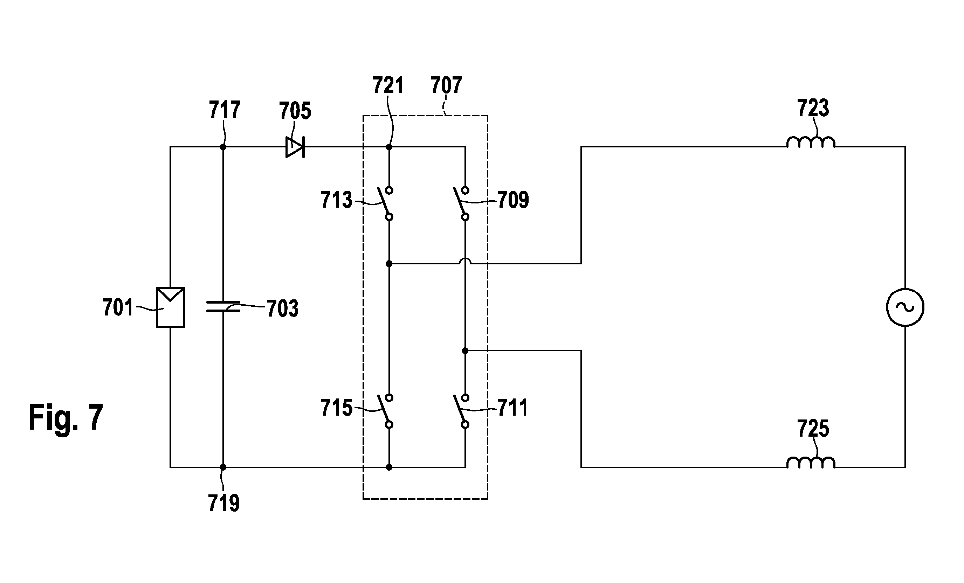

Fig. 7 zeigt eine Energieerzeugungsanordnung mit beispielsweise einem Solarzellenmodul 701, das eine Solarzelle sein oder umfassen kann, und einen hierzu parallel geschalteten Energiespeicher 703, beispielsweise einem Kondensator. Die Energieerzeugungsanordnung umfasst ferner eine Wechselrichteranordnung mit einem unidirektionalen elektrischen Element 705, beispielsweise einer in Flussrichtung geschalteten Diode, sowie einer Wechselrichterschaltung 707, welche einphasig sein kann und als eine H-Brücke mit den Schaltelementen 709, 711, 713 und 715 ausgeführt ist. Ein Knotenpunkt zwischen den Schaltelementen 709 und 711 sowie ein Knotenpunkt zwischen den Schaltelementen 713 und 715 bilden ein Ausgangstor der Energieerzeugungsanordnung. Ein Eingangstor der Wechselrichteranordnung wird durch die Anschlüsse 717 und 719, zwischen welchen der Energiespeicher 703 geschaltet ist, gebildet. Das unidirektionale elektrische Element 705 ist der Wechselrichteranordnung 707 vorgeschaltet und in Flussrichtung zwischen dem Anschluss 717 des Eingangstors und einem Eingangsanschluss 721 der Wechselrichteranordnung geschaltet. Das Ausgangstor der Energieerzeugungsanordnung kann beispielsweise mit einem öffentlichen Energieverteilungsnetz verbunden werden, dessen Zuleitungen durch Induktivitäten 723 und 725 charakterisiert sind.

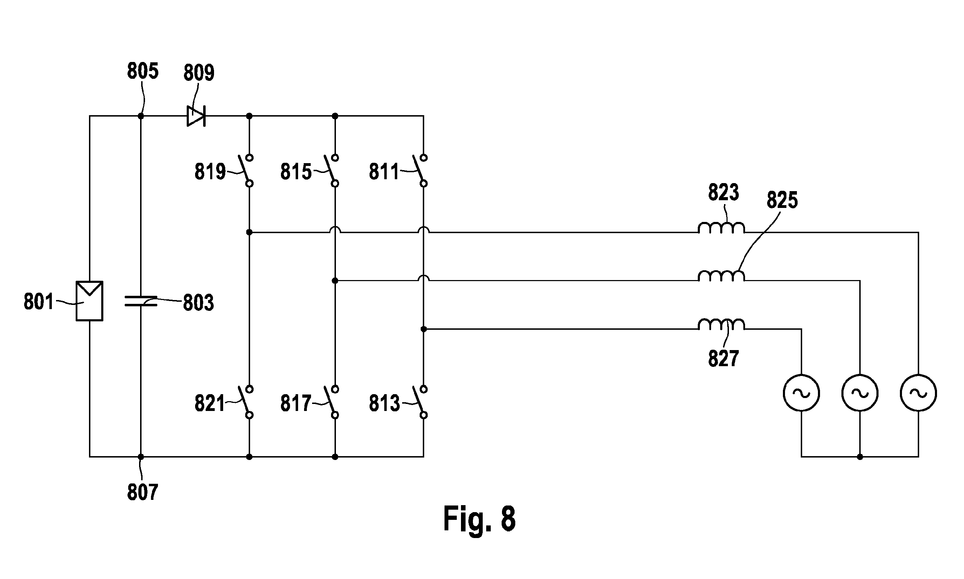

Fig. 8 zeigt eine Energieerzeugungsanordnung mit einem Solarzellenmodul 801, beispielsweise einer Solarzelle, und einem parallel hierzu geschalteten Energiespeicher 803. Der Energiespeicher 803 ist gleichzeitig mit einem Anschluss 805 und einem Anschluss 807 einer Wechselrichteranordnung geschaltet, welche ein unidirektionales elektrisches Element 809, beispielsweise eine Diode, und eine Wechselrichterschaltung umfasst, welche dreiphasig ist und beispielsweise eine B6-Brücke mit den Schaltern 811, 813, 815, 817, 819 und 821 umfassen kann. Zwischen den jeweils in Reihe geschalteten Schaltern 811, 813, 815, 817, 819 und 821 sind jeweils Phasenausgangsanschlüsse angeordnet, welche mit einem Energieversorgungsnetz, dessen Zuleitungen mit Induktivitäten 823, 825 und 827 belastet sind, verbunden.

Durch die Verwendung der mittels der in den Figuren 7 und 8 dargestellten Dioden 705 und 809 realisierten Diodenabtrennung kann erfindungsgemäß die Verlust bringende Umladung der Solarzelle 801 sowie des beispielsweise als ein Lade-Elko ausgebildeten Zwischenschaltkreiskondensators 803 bzw. 703, vermieden werden. Die Dioden 705 und 809, welche unidirektionale elektrische Elemente darstellen, können auch in dem negativen Pfad mit umgekehrter Polarität eingesetzt werden. Darüber hinaus können mehrere Dioden in der Hin- und in der Rückleitung eingesetzt werden.

Das erfindungsgemäße Konzept kann vorteilhaft zur Wechselrichtung konstanter Signale in Solarzellenanlagen, in Windkraftanlagen, in Drehfeldmotoren oder in Lüftermotoren eingesetzt werden.

## Patentansprüche

1. Wechselrichteranordnung zur Umwandlung eines konstanten Ausgangssignals eines Energieerzeugungsmoduls, insbesondere eines Solarzellenmoduls, in ein Wechselsignal, mit:
einem Eingangstor (717, 719) zum Empfangen des konstanten Ausgangssignals;
einer Wechselrichterschaltung (709, 711, 713, 715), welche dem Eingangstor (717, 719) nachgeschaltet und zur Erzeugung des Wechselsignals vorgesehen ist; und
einem unidirektionalen elektrischen Element (705), das zwischen dem Eingangstor (717, 719) und der Wechselrichterschaltung (709, 711, 713, 715) angeordnet ist, um einen rückwärtigen Stromfluss von der Wechselrichterschaltung (709, 711, 713, 715) zu dem Eingangstor (717, 719) zu unterbinden.

2. Wechselrichteranordnung gemäß Anspruch 1, wobei ein Energiespeicher (703), insbesondere ein Kondensator, parallel zu dem Eingangstor (717, 719) geschaltet ist, und wobei das unidirektionale elektrische Element (705) einen Anschluss des Energiespeichers mit einem Anschluss der Wechselrichterschaltung (709, 711, 713, 715) verbindet und vorgesehen ist, den rückwärtigen Stromfluss zur Verhinderung eines Umladestroms durch den Energiespeicher zu unterbinden.

3. Wechselrichteranordnung gemäß Anspruch 2, wobei der Energiespeicher (703) zumindest zwei in Reihe geschaltete Kondensatoren aufweist und wobei ein Knotenpunkt zwischen den in Reihe geschalteten Kondensatoren als Referenzpotentialanschluss, insbesondere als Masseanschluss, ausgeführt ist.

4. Wechselrichteranordnung gemäß Anspruch 3, wobei die Wechselrichterschaltung (709, 711, 713, 715) eine Brückenschaltung mit zumindest zwei in Reihe geschalteten Schaltelementen, insbesondere Schaltern, ist, und wobei ein Knotenpunkt zwischen den in Reihe geschalteten Schaltelementen mit dem Knotenpunkt zwischen den Reihe geschalteten Kondensatoren verbindbar, insbesondere über ein weiteres Schaltelement verbindbar ist, um einen Ausgang der Wechselrichterschaltung (709, 711, 713, 715) mit dem Referenzpotential zu verbinden.

5. Wechselrichteranordnung gemäß einem der vorstehenden Ansprüche, wobei zumindest ein Schaltelement, insbesondere ein Transistorschalter, in Reihe mit dem Energiespeicher (703) geschaltet und zum zu- oder abschalten des Energiespeichers (703) vorgesehen ist.

6. Wechselrichteranordnung gemäß einem der vorstehenden Ansprüche, wobei das Eingangstor (717, 719) einen ersten Anschluss und einen zweiten Anschluss aufweist, wobei die Wechselrichterschaltung (709, 711, 713, 715) einen Eingangsanschluss und einen Ausgangsanschluss umfasst, wobei ein Energiespeicher mit dem ersten Anschluss und mit dem zweiten Anschluss des Eingangstors (717, 719) verbunden ist und wobei das unidirektionale elektrische Element (705) mit dem ersten Anschluss des Eingangstors (717, 719) und dem Eingangsanschluss der Wechselrichterschaltung (709, 711, 713, 715) verbunden ist.

7. Wechselrichteranordnung gemäß einem der vorstehenden Ansprüche, wobei das unidirektionale elektrische Element (705) unabhängig von einer Amplitude des konstanten Ausgangssignals oder des Wechselsignals oder von einem Zustand der Wechselrichterschaltung (709, 711, 713, 715) unidirektional geschaltet ist.

8. Wechselrichteranordnung gemäß einem der vorstehenden Ansprüche, wobei das unidirektionale elektrische Element (705) eine Diode, insbesondere eine in Flussrichtung betriebene Diode, oder eine zu einer Diode verschaltete Transistorschaltung ist.

9. Wechselrichteranordnung gemäß einem der vorstehenden Ansprüche, wobei die Wechselrichterschaltung (709, 711, 713, 715) eine Brückenschaltung, insbesondere eine H-Brückenschaltung oder eine B6-Brückenschaltung mit einer Mehrzahl von Schaltelementen, insbesondere Transistorschaltern, ist.

10. Wechselrichteranordnung gemäß Anspruch 9, wobei zwischen dem Eingangstor (717, 719) und der Wechselrichterschaltung (709, 711, 713, 715), insbesondere in Reihe mit dem unidirektionalen elektrischen Element (705), ein Entkopplungsschaltelement angeordnet ist, wobei das Entkopplungsschaltelement unmittelbar vor einem Umschalten zumindest eines Schaltelementes der Wechselrichterschaltung (709, 711, 713, 715) umschaltbar ist, um das zumindest eine Schaltelement im Umschaltzeitpunkt von dem Eingangstor zu entkoppeln.

11. wobei das weitere Schaltelement in einem Umschaltpunkt zumindest eines der Schaltelemente der Wechselrichterschaltung (709, 711, 713, 715) in einen hochohmigen Zustand überführt wird, um den rückwärtigen Stromfluss zu unterbinden.

12. Wechselrichteranordnung gemäß einem der vorstehenden Ansprüche, wobei die Wechselrichterschaltung (709, 711, 713, 715) einphasig oder mehrphasig, insbesondere dreiphasig als eine B6-Brücke, ausgeführt ist.

13. Energieerzeugungsanordnung, mit:
einem Energieerzeugungsmodul, insbesondere ein Solarzellenmodul mit zumindest einer Solarzelle; und
der Wechselrichteranordnung gemäß einem der Ansprüche 1 bis 11, welche parallel zu dem Energieerzeugungsmodul geschaltet ist.

14. Energieerzeugungsanordnung gemäß Anspruch 12, wobei zumindest ein Schaltelement, insbesondere ein Transistorschalter, in Reihe mit dem Energieerzeugungsmodul geschaltet und vorgesehen ist, das Energieerzeugungsmodul zu- oder abzuschalten.

15. Energieerzeugungsanordnung gemäß Anspruch 13, wobei das Schaltelement sowie das Schaltelement der Wechselrichteranordnung gemäß Anspruch 3 gleichzeitig oder synchron zu zumindest einem Schaltelement der Wechselrichterschaltung (709, 711, 713, 715) der Wechselrichteranordnung oder mit einer vorbestimmten Verzögerung nacheinander schaltbar sind.

16. Verfahren zur Umwandlung eines konstanten Ausgangssignals eines Energieerzeugungsmoduls, insbesondere eines Solarzellenmoduls mit zumindest einer Solarzelle, in ein Wechselsignal mittels einer Wechselrichterschaltung (709, 711, 713, 715), mit:
Zuführen des konstanten Ausgangssignals zu der Wechselrichterschaltung (709, 711, 713, 715) über ein unidirektionales elektrisches Element, insbesondere eine Diode, um das Wechselsignal zu erhalten.
